# EUROPEAN PATENT SPECIFICATION

(11) **EP 4 377 130 B1**
(45) Date of publication and mention of the grant of the patent: **19.11.2025**
(21) Application number: 22753750.3
(22) Date of filing: 28.07.2022
(51) Int. Cl.: B60L 53/14, B60L 53/31, H02J 7/00, B60L 53/35, G07F 15/00, G07F 17/00, H02G 3/04, H02G 3/18, B60L 53/16

(54) **ELECTRIC VEHICLE CHARGING STATION AND INTERFACE DEVICE THEREFOR**
ELEKTROFAHRZEUG-LADESTATION UND SCHNITTSTELLEEINRICHTUNG DAFÜR
STATION DE CHARGE POUR VÉHICULE ÉLECTRIQUE ET DISPOSITIF INTERFACE

(30) Priority: 28.07.2021 GB 202110854
(43) Date of publication of application: 05.06.2024
(60) Divisional application: 25172081.9
(73) Proprietor: Urban Electric Networks Ltd, Hemel Hempstead HP2 4TP (GB)
(72) Inventor: FREELING-WILKINSON, Olivier, Hempstead HP2 4TP (GB)
(74) Representative: Maidment, Marc
(86) International application number: PCT/GB2022/051988
(87) International publication number: WO 2023/007169

(56) References cited:
- WO-A1-2012/034225
- WO-A1-2021/133174
- CN-A- 107 097 679
- CN-A- 111 959 323
- DE-A1- 102011 105 421
- GB-A- 2 588 672

## Description

The present invention relates to a charging interface device for releasably mounting on a bollard of an electric vehicle charging station; an electric vehicle charging station including the charging interface device; and methods of installing and servicing the electric vehicle charging station.

### BACKGROUND TO THE INVENTION

Electrically-powered vehicles are becoming increasingly widespread, and run solely on batteries which must be recharged periodically. This usually requires the electric vehicle to be plugged into a charging station for a period of time, which can be over 40 minutes. This is relatively long compared to refuelling times for petrol/diesel vehicles. There is a need to provide more electric vehicle charging stations to accommodate the increasing numbers of electric cars.

In some towns and cities, electric vehicle charging stations have been installed on streets. A typical electric vehicle charging station includes a column installed on the pavement with a socket or charging cable connected to mains power. It is typically cemented in place. However, such charging stations can restrict pavement space for pedestrians, in conjunction with other objects installed in the street, and can be considered unsightly.

One way of addressing these issues is to provide a charging station with a retractable bollard or charging portion. The charging station is installed in the ground by placing it in an excavated hole in the pavement and connecting a mains cable to it. In use, the bollard can be extended above the surface to expose its charging socket for use, and when charging is complete the bollard can be retracted into the ground for storage. This frees up street space whilst concealing the charging station from view when not in use. Of course, when excavating a hole in the ground for the charging station, care must be taken to avoid damaging utilities such as water pipes, power cables and drainage, which may be installed relatively close to the surface.

After installation, one or more components of the charging station may fail over time, for example due to wear, exposure to the elements or another form of damage. Carrying out maintenance on an electric vehicle charging station installed in a pavement is not facile and may require the charging station to be exhumed. In some cases the pavement may need to be excavated to do this, which risks damaging both the charging station and nearby utilities, as well as requiring subsequent pavement repairs, which are costly and often result in an unsightly patchwork of repaired areas. It can be easier to replace the entire charging station with a newer charging station, rather than repair or upgrade the existing installation.

Once the charging station in the ground has been uncovered, the mains cable can be disconnected from it and the charging station lifted out of the ground. To test any repairs or upgrades which are made to the charging station, the charging station must be replaced in the ground and reconnected to the mains cable, which involves extra time and effort, particularly if further work is needed and the station must be disconnected and lifted out again.

An electric vehicle charging station with a retractable charging portion is often designed to deploy along a vertical axis to minimise the footprint of the charging station. The top of the charging station needs to be installed flush with the pavement so that it does not present a trip hazard to pedestrians when the retractable portion is not deployed above ground. However, if installed flush to the surface of a sloped pavement, such as on a hill, the charging portion will not deploy vertically but instead at an angle. This makes it awkward to use and places unwanted strain on the deployment mechanism. These issues substantially limit the suitability of a retractable electric vehicle charging station for installation in a sloped pavement.

US10554059B1 relates to a charging station where most of the required electrical connections are made on its power module prior to the assembly of the charging station. WO2010/136871A1 relates to a charging station with a plurality of detachable outlet units that facilitates more efficient maintenance work. GB2438979A relates to a charging station operable in a charging cycle for charging an electric vehicle which has a key-activated controller for controlling the charging cycle. CN107097679A relates to a buried high-power charging pile with four charging positions, where its charging pile body is provided with a cylindrical operation table which extends out of the ground and has an umbrella-shaped transparent shield on the top.

It is an object of the present invention to reduce or substantially obviate the aforementioned problems.

### STATEMENT OF INVENTION

According to a first aspect of the present invention, there is provided a charging interface device in the form of a bollard top for releasably mounting on a bollard of an electric vehicle charging station, as set out in claim 1. Optional features are set out in the dependent claims.

The charger interface device serves as a removable modular component which improves serviceability of an electric vehicle charging station. A service technician can disengage the connection means to allow the mounted charger interface device to be released from the bollard of the charging station without needing to dismantle other parts of the charging station. The modularity of the charger interface ensures that it can be easily swapped or replaced with another charger interface if there is a defect or need to upgrade the charging station. This is significantly quicker and more cost-effective than replacing the whole station, and avoids excavating the pavement and extricating the charging station from the ground.

The device may be considered to be a kit or part of a kit for servicing (e.g. repairing) or upgrading a bollard of an electric vehicle charging station.

The first and second end walls of the charging interface device may fit into the bollard. When the charger interface device is mounted to the bollard, the first and second end walls may be substantially flush with adjacent walls of the bollard, or substantially recessed with respect to adjacent walls of the bollard.

The bollard top may have a length and width substantially similar to the length and width of the bollard cross-section (or cross-section of an upper portion of the bollard).

The bollard top may include or be an uppermost surface of the charging interface device.

The bollard top may provide a walking surface.

That is, the bollard top may include a lateral surface suitable for walking on when the device is installed on top of a bollard which can be retracted into the ground.

The walking surface or lateral surface may be substantially flat. The walking surface may lie substantially flush with the surrounding surface level, such as pavement or ground level, when provided as part of a retractable bollard which is installed in the surface and provided in a retracted position below the surface.

The connection means may be a tamper resistant connection means for releasably securing the device to the bollard in a secure manner. The tamper resistant connection means may be provided by a connection means which corresponds with (or is operable by) a specialist tool. A specialist tool may be considered to be a tool which is not readily available to a member of the public.

The exact nature of the connection means is not considered to be critical to the invention. For example, the device may have one or more connectors to engage one or more complementary connectors/apertures/recesses in the bollard; or there may be latch mechanism to engage the device on the bollard; or a lock mechanism for the same.

A second charging socket may be provided, preferably in the second end wall. A second power supply connector may be provided for releasably connecting a second mains power cable to the second charging socket.

Having two charging sockets or outlets on opposite sides of the device permits two different vehicles to be charged from the same charging bollard. Fewer charging stations therefore need to be installed along a street pavement, for example.

The first socket may face laterally outwards from the device. Where provided, the second socket may face laterally outwards from the device.

The first socket may be laterally offset from a central plane disposed between and parallel to planes of the first and second end walls.

The second socket may, where provided, be laterally offset from a central plane disposed between and parallel to planes of the first and second end walls.

The first charging socket may face in a direction away from the second end wall.

The second charging socket may, where provided, face in a direction away from the first end wall.

A chamber or space may be provided between the first and second sockets or between the first and second end walls. When the device is on a bollard, this provides room for accommodating an actuator when the bollard is in a retracted position. This is particularly useful where the bollard is a telescopic bollard.

Side walls depending from sides of the bollard top may be provided. The side walls may extend from the first end wall to the second end wall. The or each side wall may be provided with a charging socket. A power supply connector may be provided for each charging socket in the or each side wall.

Locking means may be provided for the first charging socket and/or second charging socket. The locking means may prevent plug or charging cable removal from the socket(s) during charging. Where multiple charging sockets are provided, a locking means may be provided for each charging socket.

The or each locking means may include a servo motor. One or more servo motors may be provided to operate the or each locking means. A locking mechanism may be actuatable by the servo motor(s). The locking mechanism may be actuated by a signal from a controller. The signal may be produced in response to a sensor, switch or similar which detects when the plug or charging cable is engaged with the socket. The signal may be produced in response to the control unit permitting or initiating charging of the electric vehicle.

The locking means prevents accidental unplugging of the charging cable plug. The provision of a servo motor or motors allows the locking means to act as an automated locking means which temporarily locks the plug into the socket.

The first and second end walls may be spaced apart. The end walls may be spaced apart by the length or longest dimension (selected from length and width) of the bollard top.

The first end wall may be substantially L-shaped. The second end wall may be substantially L-shaped.

Either or both end walls may be L-shaped in profile when the device is viewed from the side. That is, when viewed along an axis parallel to respective planes of the bollard top and either/both of the end walls.

The or each substantially L-shaped wall may have a first wall section which depends from the bollard top and a second wall section which is substantially orthogonal to the first wall section. The cable guide or support may, where provided, be provided in the second wall section. The or each L-shaped wall may also have an angled third wall section which connects the first wall section to the second wall section.

The or each L-shaped wall provides a recess behind the relevant socket (above the second wall section) to allow the mains cable to be connected to the socket. The locking means and servo motor(s) may be disposed in the recess.

The first end wall may include a cable guide or support for receiving a mains power cable. The second end wall may include a cable guide or support for receiving a mains power cable.

Each cable guide or support may include a power cable bore or channel for receiving a portion of the main power cable. The power cable bore or channel may be aligned on an axis which is substantially parallel to an upright wall portion of the L-shaped end wall.

The cable guide or power cable bore may be arranged along a first axis, and the charging socket may be arranged along a second axis. The first and second axes may be substantially orthogonal.

The cable guide retains the mains power cable in position during use. This is useful to manage movement of the mains cable near the power supply connectors when the bollard extends or retracts. This also reduces stress and strain on the main power cable.

The device may be substantially symmetric. The device may be substantially symmetric about a central plane bisecting the device between the first and second end walls.

The term 'substantially symmetric' means that the body of the charging interface device, i.e. the bollard top and end walls (and, if provided, side walls), is symmetric enough to be installed on top of a bollard in two different orientations which are rotationally offset by 180 degrees about a vertical axis.

An upper surface of the bollard top may be sloped at an acute angle. The sloped top may be sloped in at least one dimension relative to a lateral plane through the first and/or second end walls. The lateral plane may be perpendicular to the first and/or second end walls.

The sloped surface may be sloped from a first end of the bollard top to an opposing second end of the bollard top.

The sloped upper surface may be substantially planar.

The upper surface of the bollard top may be sloped at an acute angle in two orthogonal dimensions relative to the lateral plane.

The sloped upper surface can be selected to correspond to a slope angle of an area of a pavement. That is, an area of pavement which is not substantially horizontal within the footprint of the charging station (typically on the order of about 1m²).

Thus, when fitted to a charging station and installed in that area of pavement, the top of the bollard is substantially similar in height to the surrounding pavement and does not present a trip hazard when the bollard is retracted. This is preferred where the charging station has a sloped upper housing surface, so that the slopes of the bollard top and the housing are substantially matched to the pavement slope.

The charging interface device (e.g. the bollard top) may include a load sensing arrangement or obstruction detector/sensor. For example, a proximity sensor may be provided.

The bollard top may include one or more reed switches. There may be a first reed switch in a first region of the bollard top. There may be a second reed switch in a second region of the bollard top. The bollard top may include a floating or sprung plate.

The reed switches are used to detect when the bollard top is obstructed or subject to a load. For example, if during bollard deployment the bollard encounters an overhead obstruction, the bollard top can tilt slightly (e.g. if a floating or sprung plate is used) and one or more of the reed switches changes state. A controller in the charging station or charging interface device can then cease bollard deployment in response to this, thereby preventing damage to the charging interface device, charging station and/or the overhead obstruction (e.g. vehicle).

The bollard top, the first end wall and the second end wall may form a generally U-shaped body, particularly a square-bottomed or rectangular-bottomed U-shape.

In use, when mounted to a bollard of an electric vehicle charging station, the body may be considered to be an inverted generally U-shaped body. The inverted nature refers to the bottom of the U-shape being disposed at a height above the sides (i.e. end walls) of the U-shape.

The body may be U-shaped in profile when the device is viewed from the side. That is, when viewed along an axis parallel to respective planes of the bollard top and either/both of the end walls.

The U-shaped body may be open at either or both sides, such that the body is generally defined by the first and second end walls and bollard top. The U-shaped body may substantially lack side walls extending between the first and second end walls.

According to a second aspect of the present invention, there is provided an electric vehicle charging station as set out in claim 8. Optional features are set out in the dependent claims.

The advantages are similar to the first aspect of the invention. If the charging interface (e.g. socket or power connector) becomes damaged or worn out then the bollard top, i.e. the charging interface device, can be easily replaced or serviced. This avoids digging up the pavement or otherwise removing the charging station from the ground.

The station may further comprise a top plate. The top plate may be releasably secured to the top of the housing. The top plate may include an opening to allow movement of the bollard between the retracted and deployed positions.

The bollard top (provided by the charging interface device) may be substantially flush with the top plate when the bollard is in the retracted position.

The charging station may include an actuator or mechanism for moving the bollard from the retracted position to the extended position, and from the extended position to the retracted position.

The actuator may be electrically powered. The actuator may be hydraulically powered. Electronic actuators are preferred for comparatively better reliability in temperature extremes and fault diagnostics.

The charging station may comprise a processing unit or controller for controlling movement of the movable bollard. The processing unit or controller may be disposed outside of the bollard. The processing unit or controller may be disposed at or towards one end of the housing.

The top plate can be removed or opened to access the actuator or processing unit, for example. Providing the processing unit at one end of the charging station allows the processing unit to be more easily serviced or replaced, and can provide for a more direct connection to a mains power source.

The control unit or electronic assembly may be housed within a separate electrical enclosure, e.g. in a base frame of the housing.

This can allow the charging station to operate with a bollard of smaller size, because it does not need to accommodate the electronic assembly.

An upper surface of the top plate may be angled or sloped at a non-orthogonal angle with respect to the vertical axis of the bollard when the top plate is secured to the top of the housing.

The surface of the top plate is preferably shaped to be substantially flush where it meets the pavement (when installed in the ground) and substantially flush with the perimeter of the bollard top when the bollard is in the retracted position. This mitigates the potential of a trip hazard at boundaries of the top plate respectively.

If the bollard top is sloped, the sloped upper surface of the top plate and the sloped upper surface of the bollard top may be provided in substantially parallel planes, or may be substantially contiguous, when the bollard is in the retracted position.

The slopes of the bollard and top plate should be aligned to mitigate the risk of a trip hazard where the bollard top meets the top plate in the retracted position.

According to a third aspect of the present invention, there is provided an electric vehicle charging station for charging an electric vehicle, as set out in claim 11. Optional features are set out in the dependent claims.

Providing a sloped top on the bollard allows the top of the bollard to substantially match the slope of the surrounding pavement, so that it does not present a trip hazard when the bollard is in the retracted position. That is, the top of the bollard is substantially similar in height to the surrounding pavement when the bollard is stored below ground.

A top plate may be provided on the charging station. The top plate may be substantially the same height as the surrounding pavement. The top plate may include an opening corresponding to the bollard. The top plate may be releasably securable to an upper portion of the housing.

This avoids the need to pave over the charging station once installed, and provides an easy access point to the charging station for maintenance purposes.

The top of the bollard and an upper surface of the top plate may each be angled or sloped at a common non-orthogonal angle with respect to the vertical axis of the bollard. The sloped top of the bollard may be disposed in a plane which is substantially parallel to a plane of the top plate.

The upper portion of the housing may be angled with respect to a base of the housing.

That is, the base may be substantially horizontal for stability, and the upper portion may be sloped relative to the base to conform to a slope of the surrounding pavement it is installed in (or due to be installed in).

The top of the bollard and the upper surface of the top plate may provide a substantially contiguous sloped surface when the bollard is in the retracted position.

This avoids a boundary between the top plate and bollard top from presenting a trip hazard.

The charging station may comprise a processing unit or controller for controlling movement of the movable bollard. The processing unit or controller may be disposed outside of the bollard. The processing unit or controller may be disposed at or towards one end of the housing.

Providing the processor unit at one end of the housing, outside of the bollard or the frame around the bollard, makes it easier to access the unit for servicing without extensive dismantling or excavation of the charging station.

The top plate may have a separate aperture or plate portion which can be removed specifically to access the processor unit.

An actuator may be provided in the housing for deploying and retracting the bollard. The actuator may engage an underside of the top of the bollard.

The movable bollard may be a telescopic bollard including at least a first body section and a second body section.

A mid-plate or force transfer member may be disposed between the first and second body sections of the bollard.

The mid-plate may transfer force between the first and second body sections, such as during bollard deployment. This may allow the inner section to pull up the outer section, for example.

The actuator may include first and second rods. The first and second body sections may be movable by the first and second rods respectively.

The first rod may extend first during bollard deployment, raising the first body section. The second rod may then extend, raising the second body section, after the first rod has partially or fully extended.

According to a fourth aspect of the invention, there is provided a method of servicing an electric vehicle charging station installed in the ground or in sloped ground, as set out in claim 15.

The advantages are similar to those presented for the first aspect of the invention. Repair or upgrade operations are simplified by swapping a damaged or obsolete bollard top for a new bollard top, without the need to first dig up or extensively dismantle the charging station.

The mains cable(s) may be isolated from mains power prior to disconnecting the mains cable(s) from the charging station.

The upper surface of the bollard top of the second charging interface device may have substantially the same shape or slope angle as the bollard top of the first charging interface device.

This is suitable where the slope of the surrounding pavement still matches the bollard top that is being replaced.

According to a fifth aspect of the invention, there is provided a method of installing an electric vehicle charging station in sloped ground or pavement, as set out in claim 16.

The advantages are similar to those presented in preceding aspects of the invention.

Vacant space around the charging station in the hole may be backfilled after the mains cables have been connected.

Where the charging station includes a top plate, the slope of the top plate may substantially match the slope determined in step (b) when the top plate is on the charging station.

According to a further aspect of the invention, there is provided a charging interface device as set out in claim 28. The advantages are similar to the first aspect of the invention.

Any feature or features presented with respect to one aspect of the invention may be independently provided in any another aspect of the invention.

The method may also comprise the step of moving the movable bollard to a deployed position in which it extends out from a housing of the electric vehicle charging station, prior to detaching the removable charger unit.

### BRIEF DESCRIPTION OF THE DRAWINGS

For a better understanding of the present invention, and to show more clearly how it may be carried into effect, reference will now be made by way of example only to the accompanying drawings, in which:
Figure 1 shows a side cross-sectional view of an electric vehicle charging station, with its bollard in a deployed position;
Figure 2 shows an end cross-sectional view of the electric vehicle charging station of Figure 1, with the housing and top plate hidden, where the cross-section is taken along the line A-A;
Figure 3 shows an exploded perspective view of a charging interface device of the charging station of Figure 1;
Figure 4 shows a cross-sectional side view of the charging interface device of Figure 3;
Figure 5 shows a side view of a second embodiment of an electric vehicle charging station installed in sloped ground, with its bollard in a deployed position; and
Figure 6 shows a schematic view of the electric vehicle charging station of Figure 5, with its bollard in a retracted position.

### DESCRIPTION OF PREFERRED EMBODIMENTS

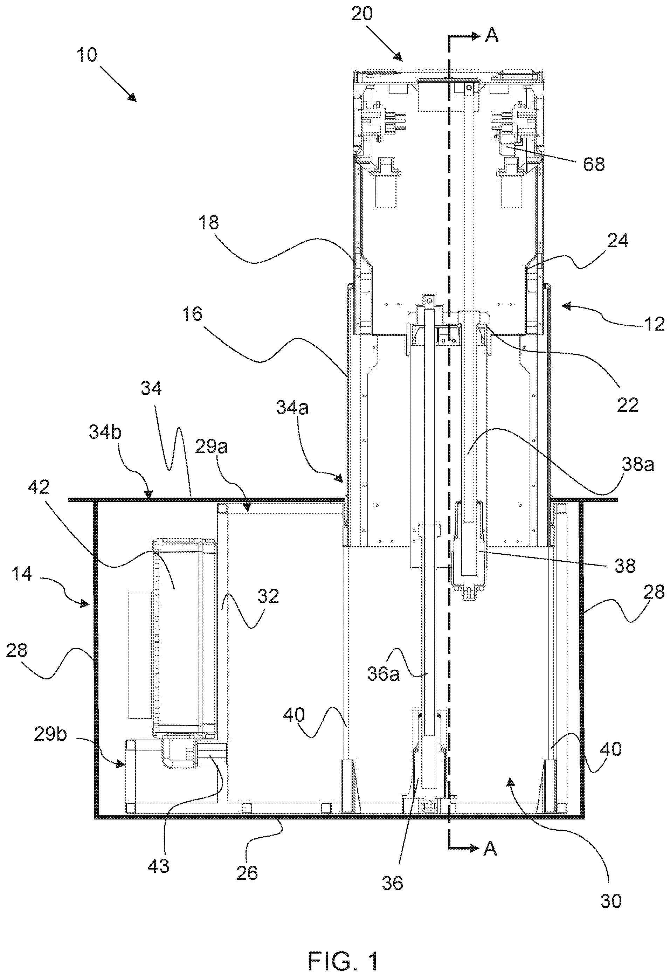

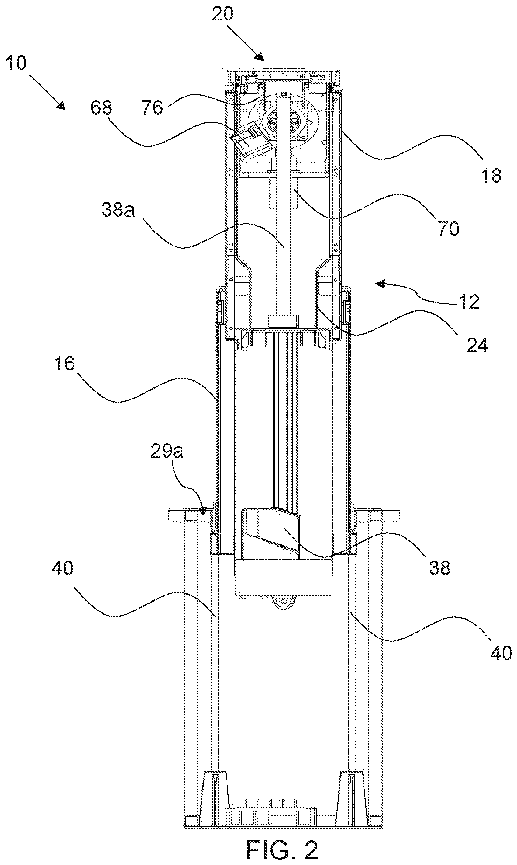

Referring to Figures 1 and 2, an electric vehicle charging station is indicated generally at 10. The charging station 10 is suitable for installation in the ground. The station 10 is about 420mm long and about 150mm wide in this embodiment.

The charging station 10 includes a bollard indicated generally at 12, and a housing indicated generally at 14. The bollard 12 is moveable between a retracted position (not shown) in which it is substantially disposed within the housing 14, and a deployed position in which it extends substantially vertically from the housing 14. Whilst Figures 1 and 2 show the retractable bollard 12 in the deployed position, it will be appreciated that the bollard 12 is moveable along a substantially vertical axis into/out of the housing 14.

In this embodiment, the retractable bollard 12 is telescopic, although other embodiments are envisaged where a non-telescopic bollard is provided. The current embodiment has a first section or profile 16 and a second section or profile 18. The second section 18 is at least partially received in the first section 16 in both the retracted position and the deployed position. The sections 16, 18 are made of steel in this embodiment.

Each section 16, 18 is a tubular member having a wall defining a hollow interior and two ends. Each section 16, 18 has a top and bottom end. Each section 16, 18 is prismatic. That is, each section has a profile that has been extruded along an axis. The bollard sections 16, 18 are hollow for accommodating an actuator mechanism between opposite ends of the charging interface device 20, when the bollard 12 is retracted.

In the current embodiment, the profile of each wall has the form of a trapezium with rounded corners. Other embodiments are contemplated in which each section has a substantially triangular, rectangular, pentagonal, hexagonal, heptagonal or octagonal cross-section for example, optionally with rounded corners. A circular cross-section to provide a cylindrical bollard is also contemplated.

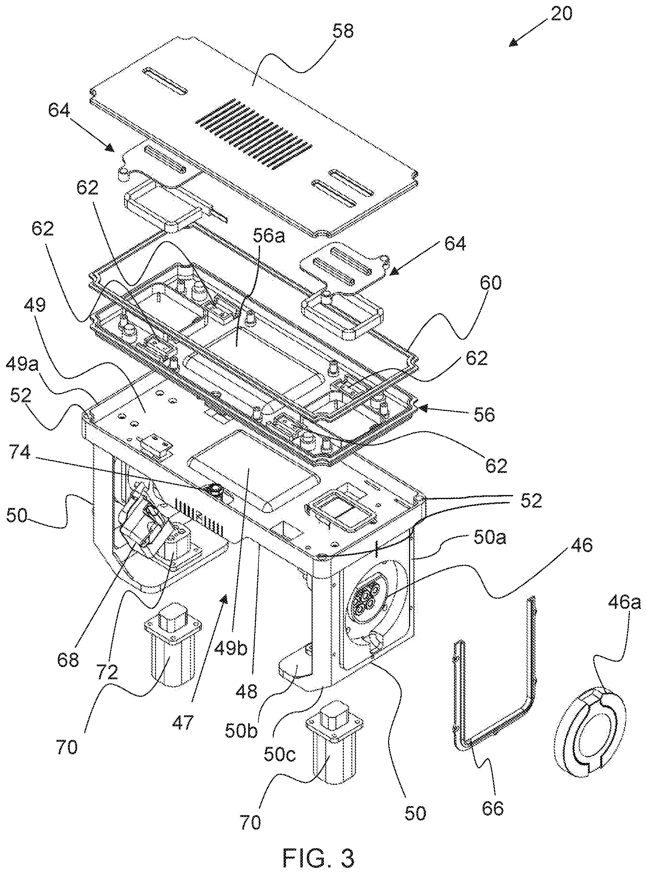

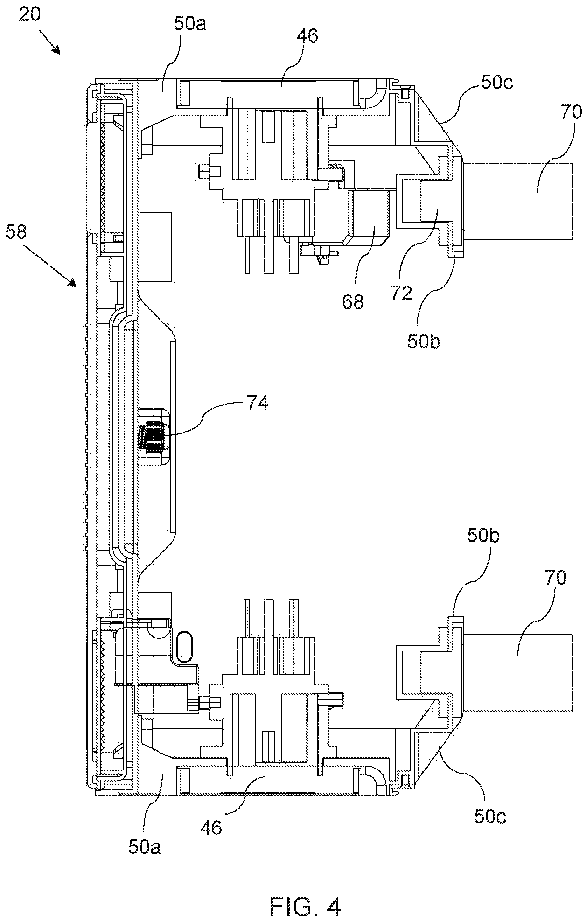

A removable charging interface device 20 is provided as a top end of the bollard 12. The device 20 substantially closes the top end of the second section 18 when fitted. The device 20 is shown in more detail in Figures 3 and 4 and will be discussed in more detail further below.

A force transfer member 22, or mid-plate, is provided at or towards the bottom end of the second section 18. The member 22 is a mid-plate in the sense that it is disposed or extends to approximately midway along the bollard 12 in the deployed position.

In this particular embodiment, the second section 18 includes an inner wall 24 extending from the member 22 towards the top of the second section 18. The inner wall 24 is connected to the wall of the second section 18. The inner wall 24 is inset or spaced from a base of the second section 18.

The housing 14 includes a base 26. The base 26 is substantially flat. The base 26 is a rectangular bottom wall in this embodiment.

A sidewall 28 is provided around a perimeter of the base 26. In the current embodiment, the sidewall 28 includes four walls although only two are visible in Figure 1. Each wall is substantially planar. Opposing pairs of walls are substantially parallel. The housing 14 is box-shaped in this embodiment.

A first frame 29a is provided within the housing 14. The frame 29a includes a base frame portion, side frame portions and a top frame portion. The frame 29a may be considered to be a cuboidal frame. The side frame portions are substantially in height to the bollard 12 in the retracted arrangement. The first frame defines a chamber 30 for receiving the bollard 12.

A second frame 29b is provided within the housing 14. The second frame 29b is disposed adjacent to the first frame 29a. The second frame 29b is smaller than the first frame 29a. The second frame 29b includes a base frame portion, side frame portions and a top frame portion. The top portion of the second frame is closer to the base portion of the first frame than the top portion of the first frame. The second frame 29b may be considered to be a cuboidal frame.

The frames 29a, 29b may in some embodiments be provided on opposing sides of a dividing wall 32. The dividing wall 32 may extend to substantially the same height as top portion of the first frame 29a. The dividing wall 32 may be substantially planar, and may be substantially parallel with the opposing sidewall.

Brackets (not shown) are provided to support the upper and lower corners where adjacent housing walls and/or frame portions meet. The backets may be internal or external brackets. Suitable fixing means such as screws are used to secure each bracket to the walls.

A top plate 34 is provided on the housing 14. The top plate 34 is releasably connected to an upper portion of the housing 14. The top plate 34 is removable to access components of the charging station 10. The top plate is made of metal in this embodiment. Plastic mouldings may provide additional parts to connect the sections to other parts of the bollard.

In any embodiment where the top plate is provided, any one or more of a grip layer or coating, a roughened surface, or surface shape variations (whilst maintaining an overall planar shape) may be provided on top of the top plate to reduce the smoothness of the surface. This minimises the slipperiness of the top plate for walking on, such as if the plate is wet.

A bollard aperture 34a is provided in the top plate 34. The opening 34a is sized and shaped to allow retractable bollard 12 to move through the plate 34 in either direction between retracted and deployed positions. Seals may be provided between the top plate 34 and sidewall 28, and/or between the bollard 12 and the opening 34a in the top plate 34.

In some embodiments, a second aperture and releasable cover (not shown) may be provided through the top plate 34 in the region indicated at 34b. This allows access to the interior of the charging station 10 without removing the top plate, which is typically heavy to lift.

Drainage holes (not shown) can be provided through the base 26 or a lower portion of the side wall 28.

The enclosure 14 may include seals for preventing or minimising ingress of water or moisture. The seals may be provided between the walls of the housing 14.

An actuator unit 36 is provided for moving the retractable bollard 12 between retracted and deployed positions. In the current embodiment, the actuator unit includes a first linear actuator 36a extending from the base 26 to an upper end of an actuator housing 38. A second actuator unit 38 includes a second linear actuator 38a extending from a lower end of the actuator housing to the upper end of the second section 18, preferably to a portion of the removable charger unit 20.

In this embodiment the actuator units 36, 38 are electrically powered.

In the current embodiment, the first and second linear actuators (or rods thereof) 36, 38 are offset from one another. The offset is also relative to the vertical axis along which the bollard 12 deploys and retracts. The linear actuators 36a, 38a are substantially parallel to each other and the vertical axis. The offset actuators allow full telescopic motion in a comparatively minimal depth. This minimises the installation depth in the ground.

Each actuator unit 36, 38 includes a housing which is a substantially tubular member having a wall defining a hollow interior and two ends. The upper end of the first linear actuator is coupled to the force transfer member 22. In this embodiment, the first linear actuator extends to the top of the force transfer member 22. The lower end of the second linear actuator is coupled to the force transfer member 22. The upper end of the second linear actuator is coupled to the charging interface device 20.

Each actuator unit 36, 38 is waterproof, preferably IP68 rated.

A bollard guiding means is provided in the housing 14 to guide the deployment and retraction of the bollard 12. In the current embodiment, four guide rails or rods 40 are provided around the periphery of the bollard 12, such as adjacent to the corners of the bollard. In this embodiment, conical supports with cylindrical bores for the rods 40 are provided at the base of each rod 40, but it will be appreciated that any suitable support and support shape may be used.

The first section 16 includes complementary guide means to interface with or follow the guide rails 40. In the current embodiment, the first section 16 includes a rail retaining means or apertured members connected to the first section 16.

A control unit 42 is provided at one end of the housing 14. The control unit 42 includes processing means configured to electronically control operation of the charging station 10.

The control unit 42 is disposed above or supported by the second frame 29b. In this embodiment, the control unit 42 is spaced from the bollard 12 by a chamber adjacent to the bollard 12 and within the first frame 29a.

The control unit 42 is operably connected to the actuator units 36, 38 and the charging interface device 20. The control unit 42 includes electronic and electrical components which are necessary to control operation of the charging station 10. The control unit 42 may use power from the mains electrical supply.

One or more mains power cable guides or supports 43 are provided. In this case, two guides are provided (although only one is visible in Figure 1). The number of guides 43 preferably matches or exceeds the number of charging sockets in the charging station 10.

The charging interface device (or bollard top) 20 will now be described in more detail.

Figures 3 and 4 show one embodiment of the removable charging interface device 20. The device 20 includes two chargers or charging sockets 46. The sockets 46 are spaced apart by a chamber, indicated generally at 47.

The device 20 includes a housing 48. The housing 48 includes an upper wall 49 and first and second end walls 50. The upper wall 49 is shaped and sized to fit in or on the upper end of the second section 18 of the bollard 12. The end walls 50 each form opposing ends of the upper wall 49. When the device 20 is fitted to the bollard 12 the end walls 50 are disposed in respective openings on opposite sides of the second section 18. The openings in the second section 18 are substantially U-shaped for receiving the end walls 50.

A peripheral wall 49a is provided around the upper wall 49. The peripheral wall 49a provides a recessed area on top of the device 20. A centre region 49b of the upper wall 49 is raised. The actuator 38 is connected under the raised region 49b during use.

Fastener apertures 52 are provided in the peripheral wall 49a, e.g. in the corners in the present embodiment. The fastener apertures 52 extend through the housing 48 to allow fasteners such as screws or bolts to be received and couple the device 20 to the bollard 12.

A top unit is provided in the recessed section on the housing 48. The top unit includes a base portion 56 and a top portion 58. A sealing gasket 60 is provided between both the base portion 56 and top portion 58. The sealing gasket 60 may also extend to the peripheral wall 49a to provide a seal between the top unit and recessed section.

A centre region 56a of the base portion 56 is raised for fitting over the raised area 49b on the housing 48.

Either or both of the top portion 58 and upper wall 49 may be considered to be / provide bollard top. Both elements lie across the top of a bollard, when the device 20 is installed on a bollard.

The top unit may include a magnet obstruction detector for detecting the presence of an object above the bollard 12.

The top unit may include a switch obstruction detector for detecting the pressure exerted by an objection on the bollard 12.

In this embodiment, a plurality of reed switches 62 are provided on the base portion. Two reed switches 62 are disposed in a first half of the base portion 56, and the other two reed switches are disposed in the second half of the base portion 56. It will be appreciated that only one reed switch may be provided in each half, or that more reed switches could be used in other embodiments.

First and second lights or LED members 64 are provided at opposite ends of the device 20. The top portion 58 includes apertures which the lights 64 pass through. Clear or coloured covers can be provided over the lights.

The top unit or a portion of the top unit such as the top portion 58 may be floating. That is, the top portion 58 can be a floating plate. A biasing means, such as one or more springs, can be provided to bias the floating top portion. If the top portion 58 encounters an obstruction during bollard movement, or if a load is applied to the top portion 58, then at least one of the reed switches 62 will change state and the control unit 42 can prevent or halt bollard movement.

The end walls 50 are substantially identical in size and shape, mirrored about a central vertical plane bisecting the device 20. Each end wall 50 is substantially L-shaped. Each end wall 50 includes an upright wall 50a and a lateral wall 50b. In this embodiment, these walls 50a, 50b are joined by an oblique wall 50c.

A charging socket or interface 46 is disposed in each end wall 50. The sockets 46 are recessed in the respective end walls 50. Each socket 46 is adapted to receive a plug of an electric vehicle charging cable. Each charging interface 46 includes a power supply connector for receiving a mains power cable and, during charging, conveying electricity to a plug engaged with the socket 46.

A cover or lid 46a is provided for covering the socket 46. This can be lifted to allow access to the socket 46 for plugging in a cable. Preferably the cover 46 is biased into a closed position for protecting the socket from rain and debris, for example.

A U-shaped member 66 is provided for fitting on each end wall 50. The U-shaped members may act as seals, mitigating water ingress into the bollard 12.

Locking means are provided for each socket 46. The locking means can lock the plug of the electric vehicle charging cable so that it cannot be removed from the socket 46 during charging. A locking servo motor 68 is provided adjacent to a rear of each socket 46. The control unit 42 of the charging station 10 identifies when a plug has been engaged with the socket 46, and activates the locking means before (or substantially concurrently with) initiation of the power supply. The control unit 42 also controls deactivation of the locking means, to allow plug removal once charging has ceased (or substantially concurrently with cessation of the power supply to the plug).

Each end wall 50 includes a cable guide or support 70. Each cable guide 70 includes a tubular bore for receiving a mains power cable.

Each cable guide 70 can be connected to or integrally formed with the respective end wall. Each cable guide 70 is provided on one of the lateral walls 50b. A corresponding cable connector or receiver 72 is provided on each lateral wall 50b.

Additional power transfer wire(s) or cabling and/or power converter(s) may be included, e.g. between the mains power cable and the socket. Any suitable means for transferring electricity may be used.

A height sensor or deployment limiter 74 is provided on the charging interface device 20. The sensor or limiter 74 in this embodiment is provided on the upper wall 49. The sensor or limiter 74 can be configured to cooperate with the actuator so that the actuator does not over-deploy or over-extend the bollard.

Referring back to Figure 2, a support or frame 76 is provided in the bollard. The support or frame may be part of the bollard 12 or may be part of the charging interface device 20. The support or frame 76 has an inverted U-shaped section which the actuator extends into. The inverted U-shaped section abuts the underside of device 20. The inverted U-shaped section is flanked on either side by U-shaped sections. This can provide structural rigidity. The support 76 may be secured to the device 20 and/or the bollard 12. The U-shaped and inverted U-shaped profiles run along longitudinal axes which are substantially parallel to an axis between the charging sockets in this embodiment. The support frame 76 may be made of metal such as steel.

Prior to use, with the charging station 10 installed in the ground, e.g. pavement, the bollard 12 is normally in the retracted position below ground. The top of the bollard, i.e. the top of the charging interface device 20, is substantially flush with the top plate 34. The top plate 34 is flush with the surface of the surrounding pavement.

The bollard 12 may rise automatically or on request by a user. During deployment the inner telescopic section 18 may be deployed first via the actuator 38. When the actuator is near or at maximum extension, the other actuator 36 begins extending to deploy the outer section 16. The force transfer member 22 between the extrusions 16, 18 can assist in raising the outer section 16 of the bollard 12.

During use, the bollard 12 is deployed for use in charging an adjacent electric vehicle via a charging cable (not shown). The cover 46a is lifted the cable is plugged into the socket 46. The control unit 42 detects the plug is engaged with the socket 46 and the servo 68 is activated to lock the plug in the socket 46. Charging can then be safely initiated when the power supply connector connects the mains supply to the socket and plug.

The second socket 46 may be used in a similar manner for charging a second electric vehicle at the same time, if desired.

Once charging is complete, the power supply connector in the relevant charging interface can disconnect the power supply from the socket. The servo 68 can then deactivate and allow the plug to be safely removed from the socket 46.

The user may also wish to cease charging irrespective of the charge state of the battery of the electric vehicle. There may be a button or screen on the charging station to permit the user to elect to cease charging, thereby disconnecting the power supply and releasing the plug in a similar manner to above.

Once there are no plugs in the sockets 46, the bollard 12 can then retract back into the ground. The retraction may be a two-stage retraction similar to the deployment, or may be concerted.

The charging station 10 is typically intended to be installed in the ground for a number of years. During that time, it is possible that the bollard may sustain damage or wear which prevents it from functioning safely and/or effectively.

One of the main parts that is more liable to fail is the charging interface device 20. For example, the LED lights or other parts may short out if water gets into the electronics. The top plate may become damaged if subjected to a heavy load or if there is a collision by a vehicle, for example. The sockets 46 may wear out through normal use or short out if water enters them.

The charging interface device 20 in the station 10 may be replaced by a new charging interface device in any of these circumstances, or as part of a regular maintenance schedule.

To remove the old device 20, the device 20 or station 10 should be isolated from mains power. The control unit 42 may have a maintenance mode which suitably prepares the charging station for the device swap. The top plate of the station 10 may be removed to facilitate access, or the bollard may be deployed to provide it at an easier working height.

The fasteners can be removed (or whatever happens to secure the device 20 to the bollard 12 can be disengaged), and the device 20 can be lifted away from the bollard 12. It may be easiest to disconnect the mains power cables from the device 20 first, depending on the length of cable available and the additional weight to lift, if there is access to do so.

The new device 20 can then be substituted in, connecting the mains cables through the respective cable guides and connecting the mains cables to the power supply connectors / charging interfaces and seating the new device on the bollard 12. These steps may be performed in any suitable order. Fasteners or other suitable connection means may then be used to secure the new device 20 in position. Suitable tests may then be carried out to check the new device 20 works as intended.

If maintenance is required on the control unit 42, then the top plate may be removed and the entire control 42 accessed for replacement or repair without needing to do anything to the bollard 12. Where the control unit aperture is provided through the top plate, then the cover for that aperture can be removed in order to access the control unit 42 more easily.

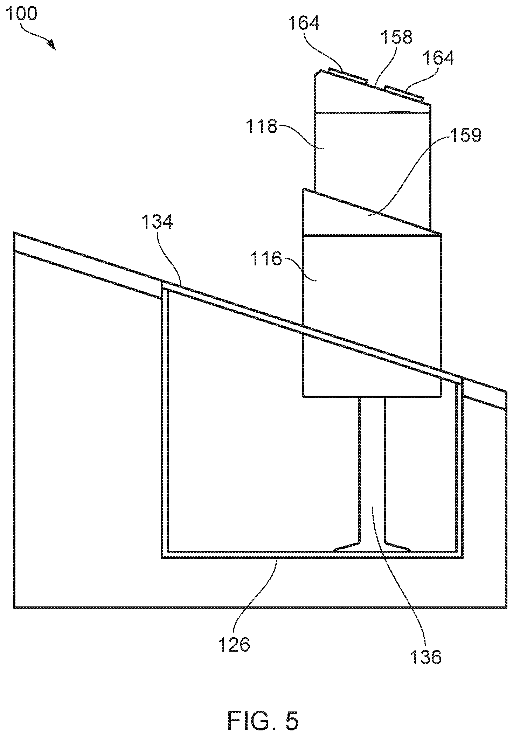

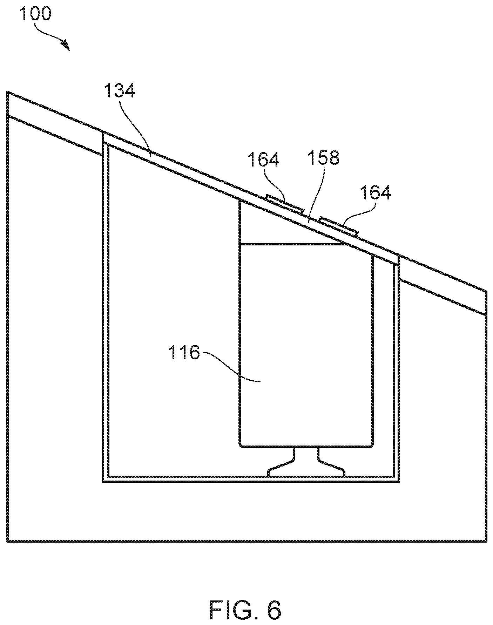

Referring to Figures 5 and 6, another embodiment of an electric vehicle charging station is generally indicated at 100. The charging station 100 has substantially similar features to the charging station 10 of the embodiment described above, although most of the features are not explicitly illustrated in Figures 5 and 6. Like reference numerals will be used to refer to like features where possible.

Note that in this embodiment it is not essential to include a charging interface device 20. The charging interface(s) may be fixed or integrated into the bollard, rather than removable. The additional features of this embodiment will now be described.

The charging station 100 is adapted for installation in sloped ground or in a sloped pavement. The retractable charging bollard 112 includes two telescopic sections 116, 118. In this embodiment, only one actuator column 136 is shown, but it will be appreciated that two actuators can be used like the first embodiment.

The ground in which the charging station 100 is installed is sloped ground. The base 126 of the housing is flat but the top plate 134 is sloped. The gradient of the top plate 134 substantially matches the gradient of the pavement in this embodiment. The plate 134 is substantially planar in this embodiment, although it is envisaged that the plate could be somewhat wedge-shaped in other embodiments.

The first section 116 includes a sloped top 159. The sloped top 159 may be a separate member coupled to the section 116, or may be integrally formed with the section 116. The slope of the sloped top 159 substantially matches that of the top plate 134. When the bollard is retracted then the sloped top 159 is substantially flush with the sloped top plate 134 (see Figure 6).

The second section 118 includes a sloped top 158. The sloped top 158 may be a separate member coupled to the section 118, or may be integrally formed with the section 118. In some embodiments, the sloped top 158 is a top of a charging interface device 20, but this is not essential. The slope of the sloped top 158 substantially matches that of the other sloped top 159 and the top plate 134. When the bollard is retracted then the sloped top 158 is substantially flush with the other sloped top 159 and the sloped top plate 134 (again, see Figure 6).

It will be appreciated that two sloped tops 158, 159 are provided because there are two telescopic sections 116, 118. If a non-telescopic bollard is provided, then there would be only one sloped top, plus the sloped top plate. If a telescopic bollard with n telescopic sections is provided, then there would be n sloped tops, plus the sloped top plate.

The ground in this embodiment only has an apparent slope in one direction (or dimension). However, it will be appreciated that the sloped top surfaces of the charging station 100 may be sloped in both lateral and longitudinal directions for ground that is sloped in two dimensions in other embodiments.

The lights 164 on top of the bollard also have sloped tops in this embodiment, again at a substantially similar angle to the other sloped tops. The lights 164 protrude slightly from the ground when the bollard 112 is retracted - see Figure 6.

As part of the preparation work for installing a charging station in a sloped pavement (or other sloped substructure), the slope or gradient of the ground can be established immediately around the location where the charging station is to be installed. This allows for selection of a suitable sloped top plate 134 and other sloped elements 158, 159, 164. Alternatively, if a plurality of differently top plates and top elements are available, then it is not necessary to establish the slope in advance as trial and error could be used during the actual installation process.

A hole is excavated for receiving the charging station 100 with sloped tops 158, 159. The station 100 is placed in the hole and mains cable(s) connected to it. The bollard 112 should be aligned on a substantially vertical axis. The hole is backfilled around the charging station, e.g. with cement. The sloped top plate 134 is then secured to the station 100. If it is not sufficiently flush with the surrounding pavement or ground, then some minor adjustments may be possible, e.g. abrading or rounding off edges of neighbouring paving slabs or bricks.

The embodiments described above are provided by way of example only, and various changes and modifications will be apparent to persons skilled in the art without departing from the scope of the present invention as defined by the appended claims.

## Claims

1. A charging interface device (20) for releasably mounting on a bollard (12) of an electric vehicle charging station (10), the charging interface device comprising a housing (48) including an upper wall (49) and first and second opposing end walls (50) depending from respective ends of the upper wall for fitting in or to the bollard, a first charging socket (46) for receiving a plug of an electric vehicle charging cable, and a first power supply connector for releasably connecting a first mains power cable to the first charging socket, in which at least one of the upper wall, the first end wall and the second end wall includes connection means for releasably securing the charging interface device to the bollard, ***characterised in that*** the charging interface device is in the form of a bollard top, and the first charging socket is in the first end wall, the first charging socket facing in a direction away from the second end wall.

2. A charging interface device (20) as claimed in claim 1, in which a second charging socket (46) is provided in the second end wall (50), the second charging socket facing in a direction away from the first end wall (50), optionally in which a second power supply connector is provided for releasably connecting a second mains power cable to the second charging socket.

3. A charging interface device (20) as claimed in any preceding claim, in which locking means is provided for the first charging socket (46) and, where provided, the second charging socket (46) for preventing plug removal from said socket during charging, optionally in which the or each locking means includes one or more servo motors (68).

4. A charging interface device (20) as claimed in any preceding claim, in which one, some or all of the following are provided:
the first end wall (50) is substantially L-shaped and includes a first cable guide or support (70);
the second end wall (50) is substantially L-shaped and includes a second cable guide or support (70);
the upper wall, the first end wall and the second end wall form a generally U-shaped body; and
the bollard top includes one or more reed switches (62).

5. A charging interface device (20) as claimed in any preceding claim, in which the charging interface device is substantially symmetric about a central plane midway between the first and second end walls (50), and the first charging socket (46) is offset to one side of the central plane.

6. A charging interface device (20) as claimed in any preceding claim, in which an upper surface of the upper wall is sloped from one end to the other end, the sloped upper surface being substantially planar and sloped at an acute angle either (i) in at least one dimension relative to a lateral plane through the first and second end walls (50) or (ii) in two orthogonal dimensions relative to the lateral plane.

7. A kit for making, servicing or upgrading an electric vehicle charging station, the kit comprising a charging interface device (20) in the form of a bollard top as claimed in any preceding claim.

8. An electric vehicle charging station (10) for charging an electric vehicle, the electric vehicle charging station comprising:
a housing (14) for installation in the ground;
a bollard (12) which is moveable along a substantially vertical axis between a retracted position in which the bollard is disposed substantially within the housing and a deployed position in which the bollard extends out of the housing; and
a charging interface device (20) as claimed in any of claims 1 to 6 or a kit as claimed in claim 7, the charging interface device being releasably connected to the bollard as a top of the bollard.

9. An electric vehicle charging station (10) as claimed in claim 8, further comprising a top plate (34) which is releasably secured to the top of the housing (14), the top plate including an opening (34a) to allow movement of the bollard (12) between the retracted and deployed positions, in which the upper wall of the charging interface device (20) is substantially flush with the top plate when the bollard is in the retracted position, optionally in which an upper surface of the top plate is angled or sloped at a non-orthogonal angle with respect to the vertical axis when the top plate is secured to the top of the housing and the bollard is in the retracted position.

10. An electric vehicle charging station (10) as claimed in claim 9, when dependent on claim 6, in which the sloped upper surface of the top plate (34) and the sloped upper surface of the upper wall are provided in substantially parallel planes or are substantially contiguous when the bollard (12) is in the retracted position.

11. An electric vehicle charging station (100) for charging an electric vehicle, the electric vehicle charging station comprising:
a housing (14) for installation in the ground;
a bollard (112) which is moveable along a substantially vertical axis between a retracted position in which the bollard is disposed substantially within the housing and a deployed position in which the bollard extends out of the housing; and
a charging interface device (20) as claimed in any of claims 1 to 5 as a top (158, 159) of the bollard, in which the top of the bollard is angled or sloped at a non-orthogonal angle with respect to the vertical axis.

12. An electric vehicle charging station (100) as claimed in claim 11, in which a top plate (134) is releasably securable to an upper portion of the housing, the top plate including an opening corresponding to the bollard (112), and the top of the bollard and an upper surface of the top plate are each angled or sloped at a common non-orthogonal angle with respect to the vertical axis.

13. An electric vehicle charging station (100) as claimed in claim 12, in which the top of the bollard (112) and the upper surface of the top plate (134) provide a substantially contiguous sloped surface when the bollard is in the retracted position.

14. An electric vehicle charging station (100) as claimed in any of claims 8 to 13, including one, some or all of the following:
when dependent on claim 12, the upper portion of the housing is angled with respect to a base (26, 126) of the housing (14);
a processing unit or controller (42) for controlling movement of the movable bollard (12), in which the processing unit or controller is disposed outside of the bollard and at or towards one end of the housing;
the movable bollard is a telescopic bollard including at least a first body section (116) and a second body section (118), optionally in which a mid-plate or force transfer member (22) is disposed between the first and second body sections of the bollard; and
an actuator (136) is provided in the housing for deploying and retracting the bollard, and the actuator engages an underside of the top of the bollard, optionally in which the actuator includes first and second rods and, where the movable bollard is a telescopic bollard including at least a first body section and a second body section, the first and second body sections are movable by the first and second rods (40) respectively.

15. A method of servicing an electric vehicle charging station (10) installed in the ground, such as sloped ground, the method **characterized by** comprising the steps of
a) providing an electric vehicle charging station (10) as claimed in any of claims 8 to 10, in which the charging interface device is a first charging interface device, and providing a second charging interface device (20) as claimed in any of claims 1 to 6 or a kit as claimed in claim 7 for replacing the first charging interface device (20) of the electric vehicle charging station;
b) removing the first charging interface device from the top of the bollard (12) and disconnecting the or each mains power cable from the first charging interface device; and
c) connecting the or each mains power cable to the second charging interface device, and securing the second charging interface device to the electric vehicle charging station.

16. A method of installing an electric vehicle charging station (10, 100) in sloped ground, the method **characterized by** comprising the steps of:
a) providing a hole in the sloped ground for receiving an electric vehicle charging station (10,100) as claimed in any of claims 8 to 14;
b) determining or estimating a slope of the sloped ground surrounding the hole;
c) providing an electric vehicle charging station (10, 100) as claimed in any of claims 8 to 14, in which a slope of the bollard top substantially matches the slope determined or estimated in step (b); and
d) positioning the electric vehicle charging station in the hole for connecting one or more mains cables to the electric vehicle charging station.

## Patentansprüche

1. Ladeschnittstellenvorrichtung (20) zur lösbaren Montage an einem Poller (12) einer Ladestation (10) für Elektrofahrzeuge, wobei die Ladeschnittstellenvorrichtung ein Gehäuse (48) umfasst, das eine obere Wand (49) und eine erste und eine zweite gegenüberliegende Endwand (50), die von den jeweiligen Enden der oberen Wand herabhängen, um in den Poller eingefügt oder an diesen angebracht zu werden, eine erste Ladesteckdose (46) zum Aufnehmen eines Steckers eines Ladekabels für Elektrofahrzeuge und einen ersten Stromversorgungsanschluss zum lösbaren Verbinden eines ersten Netzstromkabels mit der ersten Ladesteckdose umfasst, wobei mindestens eine der oberen Wand, der ersten Endwand und der zweiten Endwand Anschlussmittel zum lösbaren Befestigen der Ladeschnittstellenvorrichtung an dem Poller enthält, ***dadurch gekennzeichnet, dass*** die Ladeschnittstellenvorrichtung in Form eines Pollerkopfes ausgebildet ist, und sich die erste Ladesteckdose in der ersten Endwand befindet, wobei die erste Ladesteckdose in eine von der zweiten Endwand weg gerichtete Richtung zeigt.

2. Ladeschnittstellenvorrichtung (20) nach Anspruch 1, wobei eine zweite Ladesteckdose (46) in der zweiten Endwand (50) vorgesehen ist, wobei die zweite Ladesteckdose in eine von der ersten Endwand (50) weg gerichtete Richtung zeigt, wobei optional ein zweiter Stromversorgungsanschluss zum lösbaren Verbinden eines zweiten Netzstromkabels mit der zweiten Ladesteckdose vorgesehen ist.

3. Ladeschnittstellenvorrichtung (20) nach einem der vorhergehenden Ansprüche, wobei Verriegelungsmittel für die erste Ladesteckdose (46) und, soweit vorgesehen, für die zweite Ladesteckdose (46) vorgesehen sind, um ein Entfernen des Steckers aus der Steckdose während des Ladens zu verhindern, wobei optional das oder jedes Verriegelungsmittel einen oder mehrere Servomotoren (68) enthält.

4. Ladeschnittstellenvorrichtung (20) nach einem der vorhergehenden Ansprüche, einschließlich eines, einigen oder allen von Folgendem:
die erste Endwand (50) ist im Wesentlichen L-förmig und enthält eine erste Kabelführung oder -halterung (70);
die zweite Endwand (50) ist im Wesentlichen L-förmig und enthält eine zweite Kabelführung oder -halterung (70);
die obere Wand, die erste Endwand und die zweite Endwand bilden einen im Allgemeinen U-förmigen Körper; und
der Pollerkopf enthält einen oder mehrere Reedschalter (62).

5. Ladeschnittstellenvorrichtung (20) nach einem der vorhergehenden Ansprüche, wobei die Ladeschnittstellenvorrichtung im Wesentlichen symmetrisch zu einer Mittelebene in der Mitte zwischen der ersten und der zweiten Endwand (50) ist und die erste Ladesteckdose (46) zu einer Seite der Mittelebene versetzt ist.

6. Ladeschnittstellenvorrichtung (20) nach einem der vorhergehenden Ansprüche, wobei eine obere Oberfläche der oberen Wand von einem Ende zum anderen Ende geneigt ist, wobei die geneigte obere Oberfläche im Wesentlichen eben ist und in einem spitzen Winkel entweder (i) in mindestens einer Abmessung relativ zu einer seitlichen Ebene durch die erste und die zweite Endwand (50) oder (ii) in zwei orthogonalen Abmessungen zu der seitlichen Ebene geneigt ist.

7. Kit zur Herstellung, Wartung oder Nachrüstung einer Ladestation für Elektrofahrzeuge, wobei das Kit eine Ladeschnittstellenvorrichtung (20) in Form eines Pollerkopfes gemäß einem der vorhergehenden Ansprüche umfasst.

8. Ladestation (10) für Elektrofahrzeuge zum Laden eines Elektrofahrzeugs, wobei die Ladestation für Elektrofahrzeuge Folgendes umfasst:
ein Gehäuse (14) zum Einbau in den Boden;
einen Poller (12), der entlang einer im Wesentlichen vertikalen Achse zwischen einer eingefahrenen Position, in der der Poller im Wesentlichen innerhalb des Gehäuses angeordnet ist, und einer ausgefahrenen Position, in der der Poller aus dem Gehäuse herausragt, beweglich ist; und
eine Ladeschnittstellenvorrichtung (20) nach einem der Ansprüche 1 bis 6 oder ein Kit nach Anspruch 7, wobei die Ladeschnittstellenvorrichtung lösbar mit dem Poller als ein Kopf des Pollers verbunden ist.

9. Ladestation (10) für Elektrofahrzeuge nach Anspruch 8, ferner umfassend eine obere Platte (34), die lösbar an der Oberseite des Gehäuses (14) befestigt ist, wobei die obere Platte eine Öffnung (34a) enthält, um eine Bewegung des Pollers (12) zwischen der eingefahrenen und der ausgefahrenen Position zu ermöglichen, wobei die obere Wand der Ladeschnittstellenvorrichtung (20) im Wesentlichen bündig mit der oberen Platte abschließt, wenn sich der Poller in der eingefahrenen Position befindet, wobei optional eine obere Oberfläche der oberen Platte in einem nicht orthogonalen Winkel in Bezug auf die vertikale Achse abgewinkelt oder geneigt ist, wenn die obere Platte an der Oberseite des Gehäuses befestigt ist und sich der Poller in der eingefahrenen Position befindet.

10. Ladestation (10) für Elektrofahrzeuge nach Anspruch 9 bei Abhängigkeit von Anspruch 6, wobei die geneigte obere Oberfläche der oberen Platte (34) und die geneigte obere Oberfläche der oberen Wand in im Wesentlichen parallelen Ebenen vorgesehen sind oder im Wesentlichen zusammenhängend sind, wenn sich der Poller (12) in der eingefahrenen Position befindet.

11. Ladestation (100) für Elektrofahrzeuge zum Laden eines Elektrofahrzeugs, wobei die Ladestation für Elektrofahrzeuge Folgendes umfasst:
ein Gehäuse (14) zum Einbau in den Boden;
einen Poller (112), der entlang einer im Wesentlichen vertikalen Achse zwischen einer eingefahrenen Position, in der der Poller im Wesentlichen innerhalb des Gehäuses angeordnet ist, und einer ausgefahrenen Position, in der der Poller aus dem Gehäuse herausragt, beweglich ist; und
eine Ladeschnittstellenvorrichtung (20) nach einem der Ansprüche 1 bis 5 als Oberseite (158, 159) des Pollers, wobei die Oberseite des Pollers in einem nicht orthogonalen Winkel in Bezug auf die vertikale Achse abgewinkelt oder geneigt ist.

12. Ladestation (100) für Elektrofahrzeuge nach Anspruch 11, wobei eine obere Platte (134) an einem oberen Abschnitt des Gehäuses lösbar befestigt werden kann, die obere Platte eine Öffnung enthält, die dem Poller (112) entspricht, und die Oberseite des Pollers und eine obere Oberfläche der oberen Platte jeweils in einem gemeinsamen nicht orthogonalen Winkel in Bezug auf die vertikale Achse abgewinkelt oder geneigt sind.

13. Ladestation (100) für Elektrofahrzeuge nach Anspruch 12, wobei die Oberseite des Pollers (112) und die obere Oberfläche der oberen Platte (134) eine im Wesentlichen zusammenhängende geneigte Oberfläche bieten, wenn sich der Poller in der eingefahrenen Position befindet.

14. Ladestation (100) für Elektrofahrzeuge nach einem der Ansprüche 8 bis 13, einschließlich eines, einigen oder allen von Folgendem:
bei Abhängigkeit von Anspruch 12 ist der obere Abschnitt des Gehäuses in Bezug auf eine Basis (26, 126) des Gehäuses (14) abgewinkelt;
eine Verarbeitungseinheit oder Steuerung (42) zum Steuern der Bewegung des beweglichen Pollers (12), wobei die Verarbeitungseinheit oder Steuerung außerhalb des Pollers und an oder zu einem Ende des Gehäuses hin angeordnet ist;
der bewegliche Poller ist ein Teleskoppoller ist, der mindestens einen ersten Körperabschnitt (116) und einen zweiten Körperabschnitt (118) enthält, wobei optional ein Mittelplatten- oder Kraftübertragungselement (22) zwischen dem ersten und dem zweiten Körperabschnitt des Pollers angeordnet ist; und
ein Aktuator (136) ist in dem Gehäuse zum Ausfahren und Einfahren des Pollers vorgesehen, und der Aktuator gelangt mit einer Unterseite der Oberseite des Pollers in Eingriff, wobei optional der Aktuator eine erste und eine zweite Stange enthält und, wenn der bewegliche Poller ein Teleskoppoller ist, der mindestens einen ersten Körperabschnitt und einen zweiten Körperabschnitt enthält, der erste und der zweite Körperabschnitt durch die erste bzw. die zweite Stange (40) beweglich sind.

15. Verfahren zur Wartung einer im Boden installierten Ladestation (10) für Elektrofahrzeuge, wie z. B. in einem geneigten Boden, wobei das Verfahren **dadurch gekennzeichnet ist, dass** es die folgenden Schritte umfasst:
a) Bereitstellen einer Ladestation für Elektrofahrzeuge (10) nach einem der Ansprüche 8 bis 10, wobei die Ladeschnittstellenvorrichtung eine erste Ladeschnittstellenvorrichtung ist, und Bereitstellen einer zweiten Ladeschnittstellenvorrichtung (20) nach einem der Ansprüche 1 bis 6 oder eines Kits nach Anspruch 7 zum Ersetzen der ersten Ladeschnittstellenvorrichtung (20) der Ladestation für Elektrofahrzeuge;
b) Entfernen der ersten Ladeschnittstellenvorrichtung von der Oberseite des Pollers (12) und Trennen des oder jedes Netzstromkabels von der ersten Ladeschnittstellenvorrichtung; und
c) Verbinden des oder jedes Netzstromkabels mit der zweiten Ladeschnittstellenvorrichtung und Befestigen der zweiten Ladeschnittstellenvorrichtung an der Ladestation für Elektrofahrzeuge.

16. Verfahren zum Installieren einer Ladestation für Elektrofahrzeuge (10, 100) in einem geneigten Boden, wobei das Verfahren **dadurch gekennzeichnet ist, dass** es die folgenden Schritte umfasst:
a) Bereitstellen eines Lochs in dem geneigten Boden zum Aufnehmen einer Ladestation für Elektrofahrzeuge (10, 100) nach einem der Ansprüche 8 bis 14;
b) Bestimmen oder Schätzen einer Neigung des das Loch umgebenden geneigten Bodens;
c) Bereitstellen einer Ladestation für Elektrofahrzeuge (10, 100) nach einem der Ansprüche 8 bis 14, wobei eine Neigung des Pollerkopfes im Wesentlichen der in Schritt (b) bestimmten oder geschätzten Neigung entspricht; und
d) Positionieren der Ladestation für Elektrofahrzeuge in dem Loch zum Verbinden eines oder mehrerer Netzkabel mit der Ladestation für Elektrofahrzeuge.

## Revendications

1. Dispositif d'interface de recharge (20) à monter de façon détachable sur une borne (12) d'une station de recharge de véhicule électrique (10), le dispositif d'interface de recharge comprenant un boîtier (48) comprenant une paroi supérieure (49) et des première et deuxième parois d'extrémité (50) opposées en fonction d'extrémités respectives de la paroi supérieure pour l'insertion dans ou sur la borne, une première prise de recharge (46) pour recevoir une fiche d'un câble de recharge de véhicule électrique, et un premier connecteur d'alimentation pour connecter de manière détachable un premier câble d'alimentation secteur à la première prise de recharge, dans lequel au moins l'une de la paroi supérieure, la première paroi d'extrémité et la deuxième paroi d'extrémité comprend des moyens de connexion pour fixer de manière détachable le dispositif d'interface de recharge à la borne, ***caractérisé en* ce *que*** le dispositif d'interface de recharge est sous la forme d'un haut de borne, et la première prise de recharge est dans la première paroi d'extrémité, la première prise de recharge étant orientée dans une direction opposée à la deuxième paroi d'extrémité.

2. Dispositif d'interface de recharge (20) selon la revendication 1, dans lequel une deuxième prise de recharge (46) est prévue dans la deuxième paroi d'extrémité (50), la deuxième prise de recharge étant orientée dans une direction opposée à la première paroi d'extrémité (50), facultativement dans lequel un deuxième connecteur d'alimentation est prévu pour connecter de manière détachable un deuxième câble d'alimentation secteur à la deuxième prise de recharge.

3. Dispositif d'interface de recharge (20) selon l'une quelconque des revendications précédentes, dans lequel un moyen de verrouillage est prévu pour la première prise de recharge (46) et, le cas échéant, la deuxième prise de recharge (46) pour empêcher le retrait de la fiche de ladite prise pendant la recharge, facultativement dans lequel le ou chaque moyen de verrouillage comprend un ou plusieurs servomoteurs (68).

4. Dispositif d'interface de recharge (20) selon l'une quelconque des revendications précédentes, dans lequel l'un, une partie ou l'ensemble des éléments suivants sont fournis :
la première paroi d'extrémité (50) est sensiblement en forme de L et comprend un premier guide ou support de câble (70) ;
la deuxième paroi d'extrémité (50) est sensiblement en forme de L et comprend un deuxième guide ou support de câble (70) ;
la paroi supérieure, la première paroi d'extrémité et la deuxième paroi d'extrémité forment un corps généralement en forme de U ; et
le haut de borne comprend un ou plusieurs interrupteurs à lames (62).

5. Dispositif d'interface de recharge (20) selon l'une quelconque des revendications précédentes, dans lequel le dispositif d'interface de recharge est sensiblement symétrique autour d'un plan central à mi-chemin entre les première et deuxième parois d'extrémité (50), et la première prise de recharge (46) est décalée d'un côté du plan central.

6. Dispositif d'interface de recharge (20) selon l'une quelconque des revendications précédentes, dans lequel une surface supérieure de la paroi supérieure est en pente d'une extrémité à l'autre extrémité, la surface supérieure en pente étant sensiblement plane et en pente à un angle aigu soit (i) dans au moins une dimension par rapport à un plan latéral à travers les première et deuxième parois d'extrémité (50) soit (ii) dans deux dimensions orthogonales par rapport au plan latéral.

7. Kit de réalisation, d'entretien ou de mise à niveau d'une borne de recharge de véhicule électrique, le kit comprenant un dispositif d'interface de recharge (20) sous forme d'un haut de borne selon l'une quelconque des revendications précédentes.

8. Station de recharge de véhicule électrique (10) pour recharger un véhicule électrique, la station de recharge de véhicule électrique comprenant :
un boîtier (14) à installer dans le sol ;
une borne (12) qui est mobile le long d'un axe sensiblement vertical entre une position rétractée dans laquelle la borne est disposée sensiblement à l'intérieur du boîtier et une position déployée dans laquelle la borne s'étend hors du boîtier ; et
un dispositif d'interface de recharge (20) selon l'une quelconque des revendications 1 à 6 ou un kit selon la revendication 7, le dispositif d'interface de recharge étant connecté de manière détachable à la borne en tant que haut de la borne.

9. Station de recharge de véhicule électrique (10) selon la revendication 8, comprenant en outre une plaque supérieure (34) qui est fixée de manière détachable au haut du boîtier (14), la plaque supérieure comprenant une ouverture (34a) pour permettre le déplacement de la borne (12) entre les positions rétractée et déployée, dans laquelle la paroi supérieure du dispositif d'interface de recharge (20) est sensiblement au ras de la plaque supérieure lorsque la borne est en position rétractée, facultativement dans laquelle une surface supérieure de la plaque supérieure est inclinée ou en pente à un angle non orthogonal par rapport à l'axe vertical lorsque la plaque supérieure est fixée au haut du boîtier et que la borne est en position rétractée.

10. Station de recharge de véhicule électrique (10) selon la revendication 9, lorsqu'elle dépend de la revendication 6, dans laquelle la surface supérieure en pente de la plaque supérieure (34) et la surface supérieure en pente de la paroi supérieure sont prévues dans des plans sensiblement parallèles ou sont sensiblement contiguës lorsque la borne (12) est en position rétractée.

11. Station de recharge de véhicule électrique (100) pour recharger un véhicule électrique, la station de recharge de véhicule électrique comprenant :
un boîtier (14) à installer dans le sol ;
une borne (112) qui est mobile le long d'un axe sensiblement vertical entre une position rétractée dans laquelle la borne est disposée sensiblement à l'intérieur du boîtier et une position déployée dans laquelle la borne s'étend hors du boîtier ; et
un dispositif d'interface de recharge (20) selon l'une quelconque des revendications 1 à 5 en tant que haut (158, 159) de la borne, dans lequel le haut de la borne est incliné ou en pente à un angle non orthogonal par rapport à l'axe vertical.

12. Station de recharge de véhicule électrique (100) selon la revendication 11, dans laquelle une plaque supérieure (134) peut être fixée de manière détachable à une partie supérieure du boîtier, la plaque supérieure comprenant une ouverture correspondant à la borne (112), et le haut de la borne et une surface supérieure de la plaque supérieure sont chacun inclinés ou en pente à un angle non orthogonal commun par rapport à l'axe vertical.

13. Station de recharge de véhicule électrique (100) selon la revendication 12, dans laquelle le haut de la borne (112) et la surface supérieure de la plaque supérieure (134) fournissent une surface en pente sensiblement contiguë lorsque la borne est en position rétractée.

14. Station de recharge de véhicule électrique (100) selon l'une quelconque des revendications 8 à 13, comprenant un, une partie ou l'ensemble de ce qui suit :
lorsqu'elle dépend de la revendication 12, la partie supérieure du boîtier est oblique par rapport à une base (26, 126) du boîtier (14) ;
une unité de traitement ou un dispositif de commande (42) pour commander le déplacement de la borne (12) mobile, dans laquelle l'unité de traitement ou le dispositif de commande est disposé(e) à l'extérieur de la borne et au niveau ou vers une extrémité du boîtier ;
la borne mobile est une borne télescopique comprenant au moins une première section de corps (116) et une deuxième section de corps (118), facultativement dans laquelle une plaque centrale ou un organe de transfert de force (22) est disposé(e) entre les première et deuxième sections de corps de la borne ; et
un actionneur (136) est prévu dans le boîtier pour déployer et rétracter la borne, et l'actionneur est en prise avec un dessous du haut de la borne, facultativement dans laquelle l'actionneur comprend des première et deuxième tiges et, où la borne mobile est une borne télescopique comprenant au moins une première section de corps et une deuxième section de corps, les première et deuxième sections de corps peuvent être déplacées par les première et deuxième tiges (40) respectivement.

15. Procédé d'entretien d'une station de recharge de véhicule électrique (10) installée dans le sol, tel qu'un sol en pente, le procédé étant **caractérisé en ce qu'**il comprend les étapes de :
a) fourniture d'une station de recharge de véhicule électrique (10) selon l'une quelconque des revendications 8 à 10, dans lequel le dispositif d'interface de recharge est un premier dispositif d'interface de recharge, et fourniture d'un deuxième dispositif d'interface de recharge (20) selon l'une quelconque des revendications 1 à 6 ou d'un kit selon la revendication 7 pour remplacer le premier dispositif d'interface de recharge (20) de la station de recharge de véhicule électrique ;
b) retrait du premier dispositif d'interface de recharge du haut de la borne (12) et déconnexion du ou de chaque câble d'alimentation secteur du premier dispositif d'interface de recharge ; et
c) connexion du ou de chaque câble d'alimentation secteur au deuxième dispositif d'interface de recharge, et fixation du deuxième dispositif d'interface de recharge à la station de recharge de véhicule électrique.

16. Procédé d'installation d'une station de recharge de véhicule électrique (10, 100) dans un sol en pente, le procédé étant **caractérisé en ce qu'**il comprend les étapes de :
a) fourniture d'un trou dans le sol en pente pour recevoir une station de recharge de véhicule électrique (10, 100) selon l'une quelconque des revendications 8 à 14 ;
b) détermination ou estimation d'une pente du sol en pente entourant le trou ;
c) fourniture d'une station de recharge de véhicule électrique (10, 100) selon l'une quelconque des revendications 8 à 14, dans lequel une pente du haut de borne correspond sensiblement à la pente déterminée ou estimée à l'étape (b) ; et
d) positionnement de la station de recharge de véhicule électrique dans le trou pour la connexion d'un ou plusieurs câbles secteur à la station de recharge de véhicule électrique.
